Europäisches Patentamt

(19) European Patent Office

Office européen des brevets

(11) Veröffentlichungsnummer: **0 109 128**
**B1**

(12) **EUROPÄISCHE PATENTSCHRIFT**

(45) Veröffentlichungstag der Patentschrift:
20.05.87

(51) Int. Cl.⁴: **F 24 F 7/08**, F 24 F 7/013

(21) Anmeldenummer: 83201605.9

(22) Anmeldetag: 10.11.83

(54) **Wärmeaustauschende Belüftungsvorrichtung für Wohn- oder Arbeitsräume mit einem Lüfterrad.**

(30) Priorität: 13.11.82 DE 3242049

(43) Veröffentlichungstag der Anmeldung:
23.05.84 Patentblatt 84/21

(45) Bekanntmachung des Hinweises auf die Patenterteilung:
20.05.87 Patentblatt 87/21

(84) Benannte Vertragsstaaten:
DE FR GB IT SE

(56) Entgegenhaltungen:
DE-A-2 430 435
DE-A-2 626 162
DE-A-3 013 374

PATENT ABSTRACTS OF JAPAN, Band 6, Nr. 130,
16. Juli 1982, (M-143)(1008)

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB IT SE**

(72) Erfinder: **Kersten, Reinhard, Dr. rer.nat.,
Meischenfeld 29, D-5100 Aachen (DE)**
Erfinder: **Klinkenberg, Klaus, Waldstrasse 39,
D-5100 Aachen (DE)**
Erfinder: **Söllner, Gerhard, Dr.- Ing., Höfchensweg
20, D-5100 Aachen (DE)**

(74) Vertreter: **Kupfermann, Fritz- Joachim, Philips
Patentverwaltung GmbH Billstrasse 80 Postfach
10 51 49, D-2000 Hamburg 28 (DE)**

EP 0 109 128 B1

## Beschreibung

Die Erfindung bezieht sich auf eine wärmeaustauschende Belüftungsvorrichtung für Wohn- oder Arbeitsräume mit einem Lüfterrad, das über seine Leitschaufeln einen Wärmeaustausch zwischen warmer und kalter Luft herbeiführt, indem die Leitschaufeln als Wärmeübergangsflächen wirksam sind.

Werden Räume zur Einsparung von Heizenergie nach außen gut abgedichtet, so genügt der dann noch stattfindende Luftaustausch nicht mehr, den hygienisch notwendigen Frischluftbedarf des Menschen zu decken und die im Raum erzeugte Feuchtigkeit abzuführen. Es werden kontrollierte, mechanische Be- und Entlüftungen nötig.

Bei der Wohnungsbelüftung ist es z. B. oft sinnvoll, nur einen oder wenige Räume mit einem Gebläse zu belüften. Die zu fördernden Luftmengen sind dann klein, etwa 50 bis 500 m³/h, und die Förderdrücke bleiben niedrig. Zumeist ist es wirtschaftlich, die in der Fortluft enthaltene Wärmeenergie soweit wie möglich an die dem Raum zugeführte Außenluft zu übertragen. Die Anlage besteht dann aus einem Außenluftventilator mit Außenluftkanal, einem Fortluftventilator mit Fortluftkanal und einem Wärmeaustauscher, in dem sich die beiden Luftvolumenströme berühren. Da der Wärmeaustauscher wenigstens 2 m² Wärmeaustauschfläche haben sollte, wird das ganze Gerät ziemlich groß. Das schlägt vor allem dann zu Buche, wenn das Gerät in die Außenwand eines Raumes eingebaut werden soll.

Es ist üblich, zwei schnell laufende Ventilatoren zu verwenden, die den Druckabfall im Wärmeaustauscher überwinden können. Das dadurch erzeugte Geräusch kann, vor allem in Wohnräumen, störend sein. Benutzt man langsam laufende, große Ventilatoren, so wird die Anlage noch voluminöser, und es ist schwierig, den Druck zu erzeugen, den die Luftvolumenströme zur Durchquerung der Wärmeaustauschfläche benötigen.

Man kann die Ventilatoren und den Wärmeaustauscher in einem Gerät vereinigen, das die verschiedenen Funktionen gemeinsam ausübt. Ein derartiges, auf dem Markt erhältliches Gerät (CAP-I-LAR-Gebläse, System de Fries, EMW-Betrieb, 6251 Hahnstätten) besteht aus einem schnell laufenden Kapillarventilator (schnell laufendes Wärmerad), der sich je zur Hälfte in der Außenluft- und in der Fortluftleitung befindet. Die rotierende poröse Masse des Ventilators wirft die Luft zentrifugal nach außen und transportiert damit in jedem der Kanäle Luft. Gleichzeitig wird ein Wärmeaustausch vorgenommen, weil der Teil der porösen Masse, der zunächst im Fortluftkanal war, unmittelbar darauf in den Außenluftkanal gelangt. Gleichzeitig werden aber Feuchtigkeit, Geruchsstoffe und eventuelle Krankheitskeime, Bakterien usw. mit ausgetauscht. Das ist angesichts der geringen Außenluftzufuhr, die man für Wohnräume empfiehlt, bedenklich. Der schnell laufende Ventilator erzeugt ein Geräusch, das z. B. für Wohnräume zu laut sein kann. Zudem zeigt das Gerät einen beträchtlichen Kurzschluß zwischen Fort- und Außenluft.

Aus der DE-A-31 34 521 ist darüber hinaus ein Wärmeaustauschgebläse bekannt, bei dem ein Lüfterrad beiderseits einer radialen Trennfläche mit Leitflächen bestückt ist. Die mittlere Trennfläche braucht nicht plan zu sein, sie kann auch zur Luftführung verformt sein. Bei dieser Ausbildung des Lüfterrades fließen warme Fortluft und kalte Außenluft an beiden Seiten der Trennfläche radial nach außen. Der Wärmeaustausch zwischen den beiden Luftströmen über die Trennwand bleibt relativ gering (höchstens 50%), weil beide Luftströme in gleicher Richtung fließen (Gleichstromwärmeaustauscher). Die Größe der Wärmeaustauschflächen des Lüfterrades ist aus konstruktiven Gründen beschränkt, auch wenn es verformt oder mit Leitblechen bestückt ist. Insgesamt kann nur ein mäßiger Wirkungsgrad des Wärmeaustauschers erreicht werden. Die Art des Lufttransportes erzeugt starke Luftverwirbelungen und damit Geräusche, die störend sein können.

Es ist Aufgabe der Erfindung, die Funktionen der Lüfterräder der Ventilatoren und der Wärmeaustauscher in einem Lüfterrad so zu integrieren, daß die Flußlinien unter möglichst geringem Abriß längs der Leitschaufeln des Lüfterrades strömen und daß ein effizienterer Wärmeaustausch zustande kommt, in dem die Wärmeaustauschflächen so groß gemacht werden können, daß ein wirtschaftlich sinnvoller Wärmeaustausch ermöglicht wird.

Die gestellte Aufgabe ist erfindungsgemäß dadurch gelöst, daß
- innere und äußere, koaxial zueinander angeordnete Luftleitrohre angebracht sind, und
- die Leitschaufeln hohl ausgebildet und aerodynamisch geformt antreibbar im Zwischenraum zwischen den Mänteln des inneren und äußeren Luftleitrohres durchquerend angebracht sind, wobei im Betrieb die im inneren Luftleitrohr zugeströmte Luft nach außen abfließt, und ein Wärmeübergang an den umlaufenden Leitschaufeln zwischen der innen durch die Leitschaufeln und außen an den Leitschaufeln entlang fließenden Luft vor sich geht.

Die Leitschaufeln des Lüfterrades, die die Luft durch das Lüfterrad bewegen, sind dabei beiderseits ganzflächig mit der kalten und warmen Luft beaufschlagt. Damit ist ein guter Wärmeübergang gegeben. Eine Verbesserung der Wirkung tritt noch dadurch auf, daß die in der einen Richtung fließende Luft den Strömungsraum der anderen Luft durchquert (Kreuzstromwärmeaustauscher). Die Belüftungsvorrichtung kann extrem flach ausgebildet und damit gut innerhalb einer Haus- oder Zimmerwand untergebracht werden; sie besteht aus nur einem einzigen, relativ einfachen Bauteil. Der Wärmeaustausch erfolgt an rotierenden Luftleitschaufeln, also an Stellen höchster Turbulenz der Luft. Dementsprechend ergibt sich ein guter Wärmeübergang zwischen der Luft und dem Material der Luftleitschaufeln.

Kurzschlüsse zwischen den beiden Luftströmungen sind nicht möglich.

Nach einer weiteren Ausgestaltung der Erfindung ist vorgesehen, daß ein Antriebsmotor innerhalb des inneren Luftleitrohres angeordnet ist. Die Verlustwärme des Antriebsmotors kann damit auch gleichzeitig in nutzbare Wärme umgesetzt werden, wenn die zufließende Frischluft durch das innere Luftleitrohr und damit vorbei an dem Antriebsmotor strömt.

Die Erfindung wird anhand des in der Zeichnung dargestellten Ausführungsbeispieles näher erläutert. Es zeigen:

Fig. 1 ein Lüfterrad mit hohlen, radial von Luft durchströmten Leitschaufeln und

Fig. 2 ein Lüfterrad nach Fig. 1 in abgewandelter Form in einem Mauerdurchbruch.

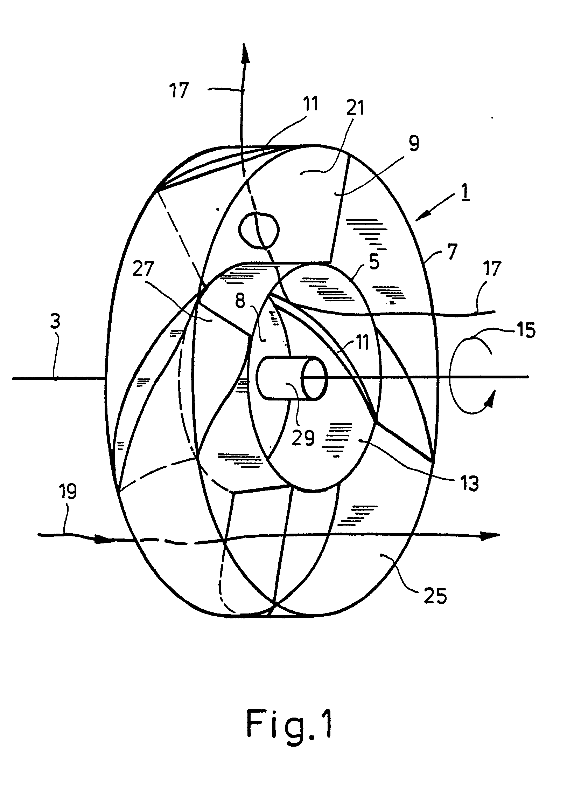

Das in Fig. 1 dargestellte Lüfterrad 1 ist um eine Achse 1 drehbar und besteht aus einem inneren Luftleitrohr 5 und einem äußeren Luftleitrohr 7. Das innere Luftleitrohr ist an der aus der Zeichnung ersichtlichen Rückseite mittels eines Deckels 8 verschlossen. Die beiden Luftleitrohre 5 und 7 sind über aerodynamisch geformte Leitschaufeln 9 miteinander verbunden und gegeneinander versteift. Die Leitschaufeln 9 sind hohl ausgebildet, wodurch sich im Inneren der Leitschaufeln 9 Kanäle 11 ausbilden, die sich zwischen den Luftleitrohren 5 und 7 erstrecken. Die Kanäle 11 sind zum Innenraum 13 des inneren Luftleitrohres 5 hin offen. Ebenso durchbrechen die Kanäle 11 das äußere Luftleitrohr 7. Wenn das Lüfterrad 1 nun in Richtung eines Pfeiles 15 gedreht wird und in Richtung eines Pfeiles 17 Luft durch das innere Luftleitrohr strömt, dann wird diese Luft im Bereich der Leitschaufeln 9 nach außen umgelenkt, durchströmt die Kanäle 11 nach außen und verläßt das Lüfterrad 1 mit einem angedeuteten Pfeil 17 am äußeren Umfang. Wird nun gleichzeitig in Richtung eines Pfeiles 19 Luft durch den Zwischenraum 25 zwischen den Luftleitrohren 5, 7 in Gegenrichtung eingeleitet, dann strömt diese Luft flächig an den Leitschaufeln 9 vorbei. Damit entsteht ein Wärmeübergang über die Wandflächen 21 der Leitschaufeln 9. Die Leitschaufeln dienen damit als Wärmeaustauscher. Kurzschlüsse zwischen den beiden Luftströmungen sind nicht möglich. Befindet sich beispielsweise im Bereich der Drehachse im inneren Luftleitrohr 5 ein Antriebsmotor 29, dann wird es vorteilhaft sein, wenn in Richtung des Pfeiles 17 frische und kühle Außenluft angesaugt wird. Diese frische und kühle Außenluft kann dann nämlich die Verlustwärme des Motors zugleich aufnehmen. Dementsprechend würde die auszutauschende warme Raumluft in Richtung des Pfeiles 19 strömen.

In der Zeichnung sind wesentlich weniger Leitschaufeln 9 dargestellt als tatsächlich im Einsatz sein werden. Die Vereinfachung wurde lediglich getroffen, um das Lüfterrad übersichtlicher darstellen zu können.

Bei einem ausgeführten Beispiel hat das innere Luftleitrohr beispielsweise einen Durchmesser von 0,3 m und eine Tiefe von 0,1 m. Die Länge der auf dem Umfang des inneren Luftleitrohres sitzenden Leitschaufeln beträgt etwa 0,15 m bei einem Gesamtdurchmesser des Rotors von 0,6 m. Auf dem Luftleitrohr 5 sind 48 hohle Leitschaufeln mit einem Anstellwinkel von 45° angeordnet. Bei diesen Abmessungen ergibt sich eine Wärmeaustauschfläche von 2,16 m². Das Lüfterrad kann als Langsamläufer arbeiten und wird beispielsweise in die Außenwand eines Raumes eingebaut oder vor eine Öffnung in dieser Wand gesetzt.

Die dem Wärmeaustausch dienende Oberfläche kann noch durch zusätzliche Rippen 27 vergrößert werden. Zur Erläuterung sind nur einige Rippen 27 dargestellt.

Um ein vorzeitiges Vermischen der auf jeder Seite der Wand, in die das Lüfterrad 1 eingebaut ist, angesaugten bzw. ausgeblasenen Luftströme 17 und 19 zu vermeiden, können Luftleitelemente am Lüfterrad angebracht oder vor dieses gesetzt werden. Es kann sinnvoll sein, den Luftleitrohren 5 und 7 eine aerodynamisch günstigere Form zu geben, z. B. die eines Kegelstumpfmantels oder eines Glockenmantels. Bei bestimmten Konstruktionen kann das äußere Luftleitrohr 7 teilweise durch die Wand des Mauerdurchbruchs bzw. einen dort angeordneten Flansch ersetzt werden.

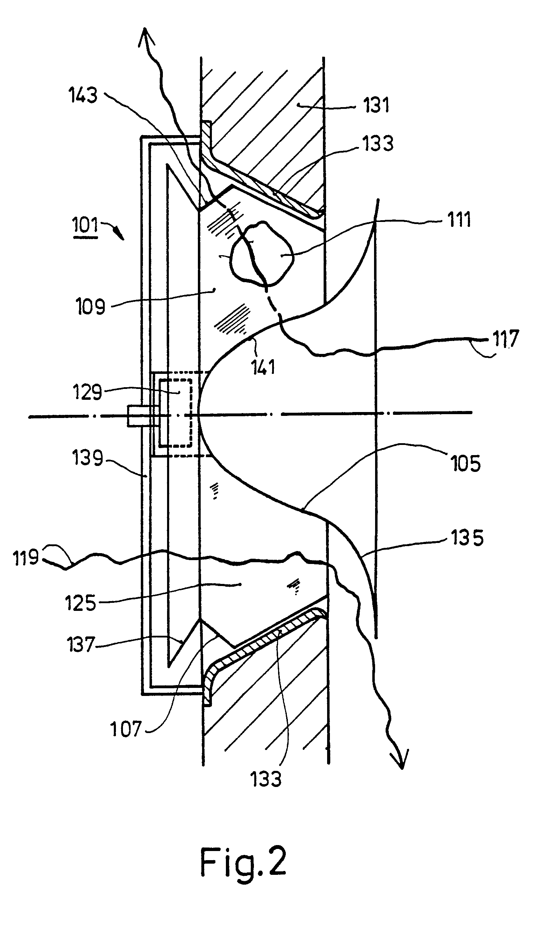

Fig. 2 zeigt das Beispiel eines Lüfterrades mit angebauten Luftleitelementen. In der Wand 131 befindet sich ein konischer Durchbruch mit einem Befestigungsflansch 133. Darin rotiert ein Lüfterrad 101, dessen inneres Luftleitrohr 105 glockenförmig ausgebildet ist und das Luftleitelemente 135 enthält. Der Antriebsmotor 129 ist auf der Raumseite des Luftleitrohres 105 angebracht und mittels Streben 139 am Flansch 133 befestigt. Das äußere Luftleitrohr 107 besteht nur aus einem kurzen Kegelstumpfmantel, an den das Luftleitelement 137 angebaut ist; den Rest der Funktion des Luftleitrohres übernimmt der Flansch 133 im Mauerdurchbruch. Die hohlen Leitschaufeln 109 haben Lufteintrittsöffnungen 141 im inneren Luftleitrohr 105 und Luftaustrittsöffnungen 143 im äußeren Luftleitrohr 107.

In der oberen Hälfte der Fig. 2 ist der Luftweg 117 der Luft durch das innere Rohr 105 und durch den Hohlraum 111 der Leitschaufeln 109 dargestellt. Zum Zeichen dafür, daß der Luftweg 117 durch die hohlen Leitschaufeln strömt, sind die Leitschaufeln im oberen Teil der Fig. 2 durch eine Flächenschraffur als nach oben hin geschlossen und der Luftweg 117 schraffiert dargestellt. Die untere Hälfte zeigt den Weg 119 der Luft durch den Raum 125 zwischen den beiden Luftleitrohren und außen entlang der Leitschaufeln.

## Patentansprüche

1. Wärmeaustauschende Belüftungsvorrichtung für Wohn- oder Arbeitsräume mit einem Lüfterrad, das über seine Leitschaufeln (9, 109) einen Wärmeaustausch zwischen warmer und kalter Luft herbeiführt, indem die Leitschaufeln als Wärmeübergangsflächen wirksam sind, dadurch gekennzeichnet, daß

- innere und äußere, koaxial zueinander angeordnete Luftleitrohre (5, 7, 105, 107) angebracht sind, und

- die Leitschaufeln (9, 109) hohl ausgebildet und aerodynamisch geformt antreibbar im Zwischenraum (25, 125) zwischen den Mänteln des inneren und äußeren Luftleitrohres (5, 7, 105, 107) durchquerend angebracht sind, wobei im Betrieb die im inneren Luftleitrohr (5, 105) zugeströmte Luft nach außen abfließt, und ein Wärmeübergang an den umlaufenden Leitschaufeln (9, 109) zwischen der innen durch die Leitschaufeln (9, 109) und außen an den Leitschaufeln (9, 109) entlang fließenden Luft vor sich geht.

2. Wärmeaustauschende Belüftungsvorrichtung nach Anspruch 1, dadurch gekennzeichnet, daß ein Antriebsmotor (29) innerhalb des inneren Luftleitrohres (5) angeordnet ist.

3. Wärmeaustauschende Belüftungsvorrichtung nach Anspruch 1, dadurch gekennzeichnet, daß die Luftleitrohre (5, 105 und 7, 107) aerodynamisch geformt sind.

4. Wärmeaustauschende Belüftungsvorrichtung nach Anspruch 1, dadurch gekennzeichnet, daß am Lüfterrad (1, 101) Luftleitelemente angebracht sind.

5. Wärmeaustauschende Belüftungsvorrichtung nach Anspruch 1, dadurch gekennzeichneet, daß vor dem Lüfterrad (1, 101) Luftleitelemente starr angebracht sind.

6. Wärmeaustauschende Belüftungsvorrichtung nach Anspruch 1, dadurch gekennzeichnet, daß ein Teil des äußeren Luftleitrohres (107) von einem im Mauerdurchbruch (131) angeordneten Befestigungsflansch gebildet wird.

## Claims

1. A heat-exchanging ventilation device for living or work-rooms, which device comprises an impeller wheel via whose blades (9, 109), which act as heat-exchange surfaces, heat is exchanged between warm and cold air, characterized in that

- inner and outer coaxial air-guide tubes (5, 7, 105, 107) are provided and

- the blades (9, 109) are hollow and aerodynamically shaped and extend across the space (25, 125) between the inner and outer air-guide tubes (5, 7, 105, 107), in which during operation the air which enters via the inner airguide tube (5, 105) is discharged outwards, and heat is transferred between the air flowing through the interior of the blades (9, 109) and the air flowing along the exterior of the blades (9, 109).

2. A heat-exchanging ventilation device as claimed in Claim 1, characterized in that a drive motor (29) is arranged in the interior of the inner air-guide tube (5).

3. A heat-exchanging ventilation device as claimed in Claims 1 and 2, characterized in that the air-guide tubes (5, 105 and 7, 107) are aerodynamically shaped.

4. A heat-exchanging ventilation device as claimed in Claim 1, characterized in that air-guide elements are arranged on the impeller (1, 101).

5. A heat-exchanging ventilation device as claimed in Claim 1, characterized in that air-guide elements are rigidly arranged before the impeller (1, 101).

6. A heat-exchanging ventilation device as claimed in Claim 1, characterized in that a part of the outer air-guide tube (107) is formed by a flange mounted in a hole (131) in a wall.

## Revendications

1. Dispositif de ventilation à échange de chaleur destiné à des locaux d'habitation ou de travail et comportant un volant ventilateur provoquant par ses pales (9, 109) une échange de chaleur entre de l'air chaud et de l'air froid du fait que les pales font fonction de surfaces de transmission de chaleur, caractérisé en ce que,

- il est prévu des tubes intérieur et extérieur coaxiaux de conduction d'air (5, 7, 105, 107)

- les pales (9, 109) de forme creuse et aérodynamique, s'étendent de façon commandable à travers l'espace (25, 125) séparant les tubes intérieur et extérieur de conduction d'air, (5, 7, 105, 107) alors qu'en fonctionnement, l'air entré dans le tube intérieur de conduction d'air (5, 105) est dirigé vers l'extérieur et que de la chaleur est transmise à l'endroit des pales tournantes (9, 109), entre l'air passant par l'intérieur des pales (9, 109) et l'air passant sur l'extérieur de celles-ci.

2. Dispositif de ventilation à échange de chaleur selon la revendication 1, caractérisé en ce qu'un moteur d'entraînement (29) est disposé dans le tube intérieur de conduction d'air (5).

3. Dispositif de ventilation à échange de chaleur selon la revendication 1, caractérisé en ce que les tubes de conduction d'air (5, 105 et 7, 107) sont de forme aérodynamique.

4. Dispositif de ventilation à échange de chaleur selon la revendication 1, caractérisé en ce que des éléments de guidage de l'air sont disposés sur le volant ventilateur (1, 101).

5. Dispositif de ventilation à échange de chaleur selon la revendication 1, caractérisé en ce que des éléments de guidage de l'air sont disposés rigidement devant le volant ventilateur (1, 101).

6. Dispositif de ventilation à échange de chaleur selon la revendication 1, caractérisé en ce qu' une partie du tube extérieur de conduction d'air (107) est constituée par une bride de fixation disposée dans l'ouverture (131) pratiquée dans un mur.

Fig.1

Fig.2